# EUROPÄISCHE PATENTANMELDUNG

(11) **EP 3 916 988 A1**
(43) Veröffentlichungstag der Anmeldung: **01.12.2021**
(21) Anmeldenummer: 20177503.8
(22) Anmeldetag: 29.05.2020
(51) Int. Cl.: H02M 7/483, H02M 7/487

(54) **SUBMODUL ALS PARALLELE SERIENVOLLBRÜCKE FÜR EINEN MODULAREN MULTILEVEL-STROMRICHTER**

(71) Anmelder: Siemens Aktiengesellschaft, 80333 München (DE)
(72) Erfinder: Die Erfindernennung liegt noch nicht vor

(57) **Zusammenfassung**

Die Erfindung betrifft ein Submodul (1) für einen modularen Multilevel-Stromrichter (2) aufweisend:
- neun abschaltbare Halbleiterschalter (S1, S2, S3, S4, S5, S6, S7, S8, S9)
- vier Kondensatoren (C_{1,1}, C_{1,2}, C_{2,1}, C_{2,2})
- sechs Netzwerkknoten (N1, N2, N3, N4, N5, N6)
- zwei Anschlüsse (11, 12),
wobei die Komponenten derart angeordnet sind, dass bei Ansteuerung der abschaltbaren Halbleiterschalter unterschiedliche Spannungen zwischen den Anschlüssen (11, 12) des Submoduls (1) erzeugt werden. Dabei konnte das Verhalten des Stromrichters und des Submoduls (1) im Fehlerfall deutlich verbessert werden.

## Beschreibung

Die Erfindung betrifft ein Submodul für einen modularen Multilevel-Stromrichter. Die Erfindung betrifft weiter einen modularen Multilevel-Stromrichter. Ferner betrifft die Erfindung ein Verfahren für den Betrieb und ein Verfahren zur Herstellung eines derartigen Submoduls.

Aus der DE 101 03 031 A1 ist ein modularer Multilevel-Stromrichter bekannt. Dieser wird auch als modularer Multilevel Konverter, MMC oder M2C bezeichnet. Diese Art von Stromrichter weist eine Vielzahl von Submodulen auf, mit denen eine stufenförmige Ausgangsspannung erzeugbar ist.

Der modulare Multilevel-Stromrichter ist eine Konverter-Topologie, die insbesondere für HVDC-Anwendungen und elektrische Antriebe geeignet ist. Der Grundaufbau des mehrphasigen Stromrichters umfasst zwei Konverterarme pro Phase, die jeweils als Serienschaltung zahlreicher Submodule ausgeführt sind. Durch den modularen Aufbau wird von jedem Konverterarm eine gewünschte Spannungsform quantisiert nachgebildet, indem mit jedem Submodul entweder eine diskrete Spannung oder ein Klemmenkurzschluss moduliert wird. Die Submodule ermöglichen dabei das Stellen verschiedener Spannungslevel.

Es existieren verschiedene Submodulvarianten. Die häufigsten derzeit bekannten Submodultypen sind Halb- und Vollbrücken.

Die Submodule enthalten dabei abschaltbare Halbleiterschalter wie beispielsweise IGBTs, IGCTs, GTOs, MOSFETs, etc. Diese können im Gegensatz zu Thyristoren einen Strom nicht nur einschalten sondern auch abschalten. Das Abschalten des Stroms kann nur in einer Stromflussrichtung erfolgen. In der entgegengesetzten Stromflussrichtungen haben die abschaltbaren Halbleiterschalter das Verhalten einer Diode. Entweder ist dieses Verhalten durch den Aufbau des Stromrichters bereits gegeben oder es wird mittels einer antiparallel zum Schaltelement des Halbleiterschalters angeordneten Diode erzielt. Somit kann ein abschaltbarer Halbleiterschalter einen Strom in einer Stromflussrichtung schalten und abschalten und in der anderen Stromflussrichtung nur leiten. Ein Strom in dieser anderen Stromflussrichtung ist somit nicht abschaltbar.

Der Erfindung liegt die Aufgabe zugrunde, das Submodul eines modularen Multilevel-Stromrichters zu verbessern.

Diese Aufgabe wird durch ein Submodul mit den Merkmalen des Anspruchs 1 gelöst. Ferner wird diese Aufgabe durch einem modularen Multilevel-Stromrichter mit den Merkmalen des Anspruchs 2 gelöst. Weiter wird die Aufgabe durch ein Verfahren zum Betreiben eines derartigen Submoduls mit den Merkmalen des Anspruchs 4 sowie durch ein Verfahren zur Herstellung eines derartigen Submoduls mit den Merkmalen des Anspruchs 5 gelöst.

Vorteilhafte Ausgestaltungen der Erfindung sind in den abhängigen Ansprüchen angegeben.

Der Erfindung liegt unter anderem die Erkenntnis zugrunde, dass sich durch die vorgeschlagene Anordnung der Halbleiterschalter und der Kondensatoren das Fehlerverhalten des Submoduls und des modularen Multilevel-Stromrichters verbessern lässt. Es lassen sich acht Schaltzustände der Halbleiterschalter definieren und damit sieben unterschiedliche Ausgangsspannungen an den Anschlüssen des Submoduls erzeugen. Darüber hinaus kann noch ein weiterer Schaltzustand erreicht werden, bei dem allerdings abhängig von der Stromflussrichtung durch das Submodul unterschiedliche Spannungen an den Anschlüssen anliegen. Somit sind insbesondere die sechs erstgenannten Schaltzustände für die Regelung und Steuerung der Submodule und des modularen Multilevel-Stromrichters besonders vorteilhaft.

Die Schaltung kommt als Submodul in einem modularen Multilevel-Stromrichter zum Einsatz. Dabei können mit dem Submodul acht für den regulären Betrieb relevante Schaltzustände aktiv geschaltet werden, die zu unterschiedlichen Ausgangsspannungen zwischen den beiden Anschlüssen des Submoduls führen. Der erste und der zweite Kondensator sowie der dritte und der vierte Kondensator sind dabei stets jeweils parallelgeschaltet. Zur besseren Übersichtlichkeit wird im Folgenden die modulierte Spannung der Parallelschaltung aus erstem und zweitem Kondensator als U_{C1} und die modulierte Spannung der Parallelschaltung aus drittem und viertem Kondensator als U_{C2} bezeichnet. Zwischen den Anschlüssen des Submoduls lassen sich folgende Spannungszustände schalten:
- Positive Reihenschaltung beider Kondensatorparallelschaltungen, entspricht der Summe aus U_{C1} und U_{C2}, also U_{C1}+U_{C2},
- jeweils einfache positive Kondensatorparallelschaltung, entspricht U_{C1} oder U_{C2},
- keine Spannung (Klemmenkurzschluss bzw. Freilauf),
- negative Kondensatorparallelschaltung, entspricht -U_{C1} oder -U_{C2} und
- negative Reihenschaltung beider Kondensatorparallelschaltungen, entspricht der negativen Summe aus U_{C1} und U_{C2}, also - (U_{C1}+U_{C2})

Diese Zustände sind alle unabhängig von der Stromrichtung, also bidirektional, schaltbar.

Das erfindungsgemäße Submodul kann funktional mit der Reihenschaltung zweier Vollbrücken verglichen werden. Dabei sind dieselben Spannungszustände zwischen den Anschlüssen des Submoduls schaltbar. Werden die einzelnen Halbleiterschalter in der vorgeschlagenen Anordnung und in einer Serienschaltung zweier Vollbrücken entsprechend dimensioniert, ergibt sich auch dieselbe Halbleiteranzahl. Wird davon ausgegangen, dass in der vorgeschlagenen Anordnung und in der Serienschaltung zweier Vollbrücken die gleiche Kondensatorenergie installiert wird, so ist die Entladeenergie bei einem Halbleiterfehler in der erfindungsgemäßen Anordnung nur halb so groß. Fällt hier ein Halbleiterschalter aus, wird immer nur einer der parallel geschalteten Kondensatoren kurzgeschlossen. Somit ist auch nur die halbe Energie sicher im Submodul bzw. Stromrichter zu beherrschen.

Dieses Fehlerverhalten könnte ebenfalls erreicht werden, wenn bei der Serienschaltung der Vollbrücken jeweils beide Submodule als Parallelschaltung ausgeführt werden. Dabei müssen jedoch mindestens sechzehn Schalter installiert werden gegenüber den neun in der erfindungsgemäßen Anordnung. Somit kann das Ziel der geringeren Fehlerenergie, also Energie im Fehlerfall, mit einer deutlich geringeren Anzahl an Halbleitern und Halbleiteransteuerungen erreicht werden. Das macht das Submodul und damit den modularen Multilevel-Stromrichter deutlich weniger komplex, kostengünstiger und einfacher steuer- bzw. regelbar.

Das Submodul kann im Grundaufbau aus zwei Teilmodulen aufgebaut werden, da das Submodul eine Spiegelsymmetrie aufweist. Es ist damit besonders vorteilhaft, das Submodul aus zwei Teilmodulen besonders einfach und kostengünstig aufzubauen. Die Teilmodule umfassen dabei die Anschlüsse, den ersten, dritten, vierten, fünften, siebten und achten Halbleiterschalter, den ersten und den dritten Kondensator sowie den ersten, dritten, vierten und den sechsten Netzwerkknoten.

Der dritte, fünfte und siebte Halbleiterschalter werden dann durch eine Parallelschaltung aus jeweils einem Halbleiterschalter der beiden Teilmodule gebildet, so dass diese dann kleiner, beispielsweise mit halber Stromtragfähigkeit, dimensioniert werden können.

In dem vorgeschlagenen Aufbau sind der dritte Halbleiterschalter, der fünfte Halbleiterschalter und der siebte Halbleiterschalter jeweils für die volle Stromtragfähigkeit des Submoduls 1 zu dimensionieren. Die übrigen Halbleiterschalter sind jeweils nur auf die halbe Stromtragfähigkeit auszulegen. Da sich der dritte Halbleiterschalter, der fünfte Halbleiterschalter und der siebte Halbleiterschalter bei einer Realisierung über zwei Teilmodule als eine Parallelschaltung aus zwei Halbleiterschaltern ergibt, sind die Halbleiterschalter innerhalb der Teilmodule alle nur auf die halbe Stromtragfähigkeit auszulegen. Damit können alle Halbleiterschalter des Teilmoduls baugleich ausgeführt werden.

Darüber hinaus sind die Halbleiterschalter der beiden Teilmodule gleich anzusteuern. Somit kann für das Submodul, das aus zwei Teilmodulen aufgebaut ist, nur eine Ansteuerschaltung für die sechs Halbleiterschalter verwendet werden, dessen Ansteuersignale parallel auf die beiden Teilmodule derart verteilt wird, dass die synchron angesteuert werden.

Unter einem Netzwerkknoten ist eine Verzweigung innerhalb einer elektronischen Schaltung, auch als elektronisches Netzwerk bezeichnet, zu verstehen. An einem Netzwerkknoten treffen damit mindestens drei Strompfade zusammen.

Im Folgenden wird die Erfindung anhand der in den Figuren dargestellten Ausführungsbeispiele näher beschrieben und erläutert. Es zeigen:
- FIG 1: den Aufbau des erfindungsgemäßen Submoduls
- FIG 2: den Aufbau des modularen Multilevel-Stromrichters und
- FIG 3: Schaltzustände des Submoduls.

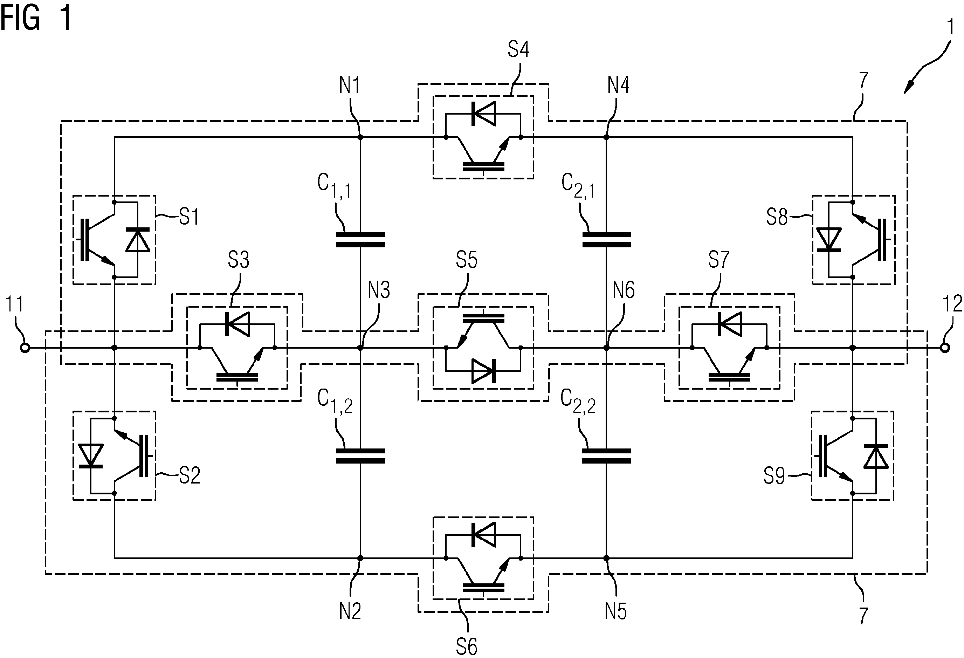

Die FIG 1 zeigt ein Ausführungsbeispiel eines erfindungsgemäßen Submoduls 1. Zwischen den einzelnen Netzwerkknoten N1...N6 ist jeweils eine Komponente angeordnet. Dabei sind die einzelnen Komponenten direkt zwischen den Netzwerkknoten N1...N6 angeordnet und verbindet die jeweiligen beiden Netzwerkknoten bzw. einen der Netzwerkknoten N1..N6 mit einem der Anschlüsse 11, 12 miteinander. Die Spannung zwischen den Anschlüssen 11, 12 des Submoduls 1 wird mit U_{SM} bezeichnet. Dabei werden in vorteilhafter Weise der dritte Halbleiterschalter S3, der fünfte Halbleiterschalter S5 und der siebte Halbleiterschalter S7 jeweils für die volle Stromtragfähigkeit des Submoduls 1 dimensioniert. Die übrigen Halbleiterschalter S1, S2, S4, S6, S8, S9 sind jeweils auf die halbe Stromtragfähigkeit auszulegen.

Es ist zu erkennen, dass der Aufbau des Submoduls 1 spiegelsymmetrisch zu einer Achse verläuft, die durch die Anschlüsse 11, 12 des Submoduls 1 gebildet wird. Dadurch ist es möglich, das Submodul 1 aus zwei gleichen Teilmodulen 7 aufzubauen, die jeweils an den Anschlüssen 11, 12, an dem dritten Netzwerkknoten N3 und dem sechsten Netzwerkknoten N6 miteinander verbunden sind. Ein Teilmodul umfasst dabei die Anschlüsse 11, 12, den ersten, dritten, vierten, fünften, siebten und achten Halbleiterschalter S1, S3, S4, S5, S7, S8, den ersten und den dritten Kondensator C_{1,1}, C_{2,1} und den ersten, dritten, vierten und den sechsten Netzwerkknoten N1, N3, N4, N6. Um aus zwei baugleichen Teilmodulen 7 ein Submodul 1 zu bilden, werden die zwei baugleichen Teilmodule 7 jeweils an den Anschlüssen 11, 12, den dritten Netzwerkknoten N3 und den sechsten Netzwerkknoten N6 miteinander elektrisch leitend verbunden.

In diesem Fall können der dritte Halbleiterschalter S3, der fünfte Halbleiterschalter S5 und der siebte Halbleiterschalter S7 ebenfalls für die halbe Stromtragfähigkeit des Submoduls 1 ausgelegt werden. Die volle Stromtragfähigkeit ergibt sich dann aus der Parallelschaltung durch den Aufbau des Submoduls 1 aus den beiden Teilmodulen 7. Dadurch können alle Halbleiterschalter innerhalb des Teilmoduls 7, insbesondere im Hinblick auf die Stromtragfähigkeit, gleich ausgelegt werden. Das erhöht die Gleichteile und erhöht die Wartungsfreundlichkeit des Submodul 1. Auch die Herstellung des Submoduls wird durch die große Menge an Gleichteilen bei den Halbleiterschaltern S1...S9 besonders kostengünstig und zuverlässig.

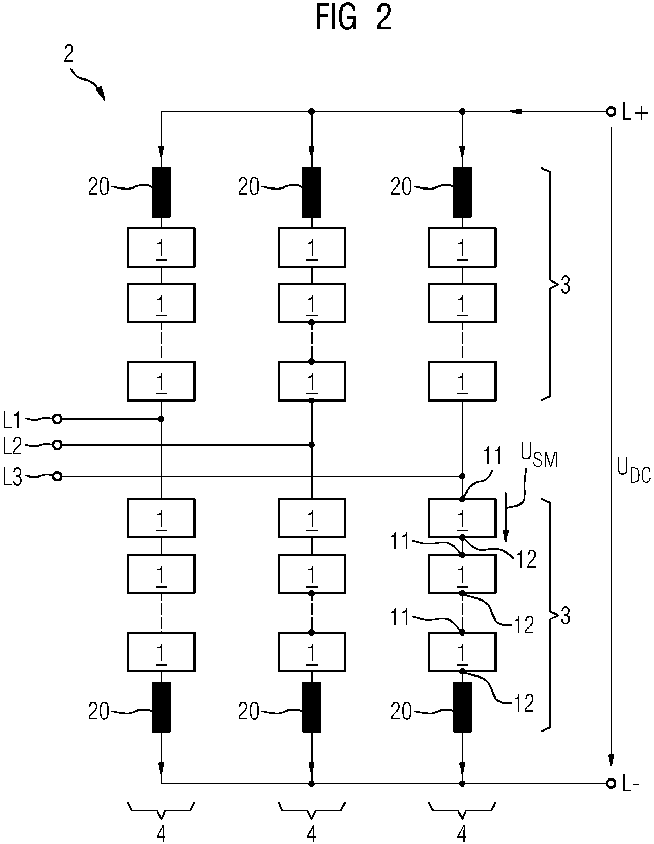

Die FIG 2 zeigt ein Ausführungsbeispiel eines modularen Multilevel-Stromrichters 2, der aus den vorgeschlagenen Submodulen 1 aufgebaut ist. Zur Vermeidung von Wiederholungen wird auf die Beschreibung zur FIG 1 sowie auf die dort eingeführten Bezugszeichen verwiesen. Diese Submodule 1 werden in ihren Anschlüssen 11, 12, die der Übersichtlichkeit halber nur in einem Konverterarm 3 dargestellt sind, in Serie angeordnet und bilden den Konverterarm 3. Zwei in Serie angeordnete Konverterarme 3 bilden die Konverterphase 4. Der Verbindungspunkt der Konverterarme 3 bildet den Phasenanschluss L1, L2, L3. Die Konverterphasen 4 sind zwischen den Zwischenkreisanschlüssen L+, L- angeordnet. Zur besseren Regel- bzw. Steuerbarkeit hat es sich als vorteilhaft erwiesen, die Reihenschaltung der Konverterarme 3 durch Induktivitäten 20 zu ergänzen, die in Serie zwischen dem Konverterarm 3 und dem jeweiligen Zwischenkreisanschluss L+, L- angeordnet sind. An den einzelnen Submodulen 1 liegt jeweils die Modulspannung U_{SM} an, die sich aus den Schaltzuständen der Halbleiterschalter S1...S9 ergibt.

Das vorliegende Ausführungsbeispiel ist als dreiphasiger modularer Multilevel-Stromrichter 2 ausgebildet.

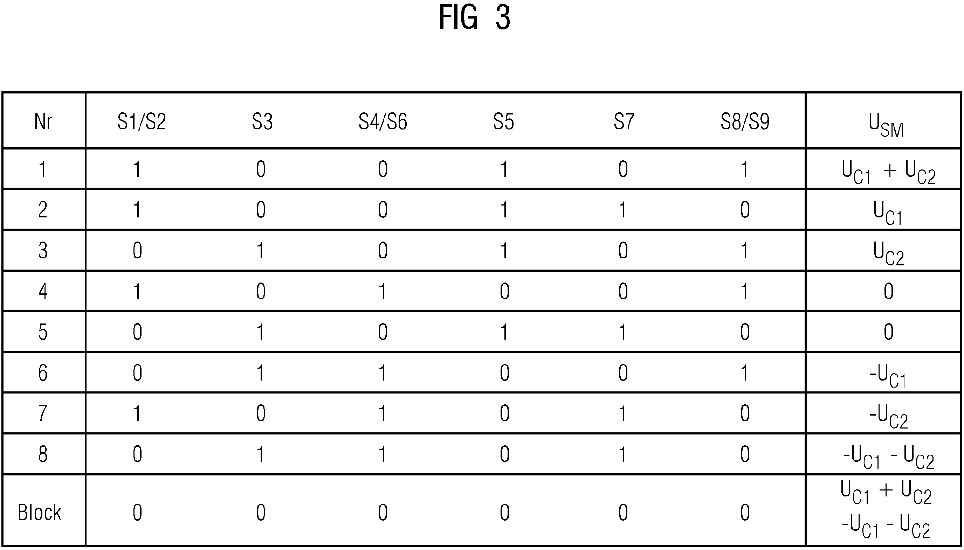

Die FIG 3 zeigt die möglichen Schaltzustände der Halbleiterschaler S1...S9 und die sich dann ergebende Spannung U_{SM} zwischen den Anschlüssen 11, 12 des Submoduls 1. Zur Vermeidung von Wiederholungen wird auf die Beschreibung zu den Figuren 1 und 2 sowie auf die dort eingeführten Bezugszeichen verwiesen. Dabei werden der erste und der zweite Halbleiterschalter S1, S2, der vierte und der sechste Halbleiterschalter S4, S6, der achte und der neunte Halbleiterschalter S8, S9 jeweils gleich angesteuert, d.h. eingeschaltet, was in der Tabelle durch eine 1 gekennzeichnet ist oder abgeschaltet, was durch eine 0 gekennzeichnet ist. Hierdurch wird deutlich, dass für die Realisierung des Submoduls 1 aus zwei Teilmodulen 7 nur eine Ansteuereinheit benötigt wird, da die spiegelbildlich angeordneten Halbleiterschalter immer den gleichen Schaltzustand annehmen.

In den bevorzugten Schaltzuständen, die von 1 bis 8 durchnummeriert sind, ergibt sich die Submodulspannung U_{SM} unabhängig von der Stromflussrichtung des Stroms durch das Submodul 1. Nur der Zustand BLOCK, bei dem alle Halbleiterschalter S1...S9 ausgeschaltet sind, liefert je nach Stromflussrichtung unterschiedliche Submodulspannungen U_{SM}, so dass dieser Zustand für die Steuerung des Submoduls 1 vorzugsweise nicht verwendet wird.

Zusammenfassend betrifft die Erfindung ein Submodul für einen modularen Multilevel-Stromrichter aufweisend:
- neun abschaltbare Halbleiterschalter
- vier Kondensatoren
- sechs Netzwerkknoten
- zwei Anschlüsse,
wobei die Komponenten derart angeordnet sind, dass bei Ansteuerung der abschaltbaren Halbleiterschalter unterschiedliche Spannungen zwischen den Anschlüssen des Submoduls erzeugt werden. Dabei konnte das Verhalten des Stromrichters und des Submoduls im Fehlerfall deutlich verbessert werden.

## Patentansprüche

1. Submodul (1) für einen modularen Multilevel-Stromrichter (2) aufweisend:
- neun abschaltbare Halbleiterschalter (S1,S2,S3,S4,S5,S6, S7,S8,S9)
- vier Kondensatoren (C_{1,1}, C_{1,2}, C_{2,1}, C_{2,2})
- sechs Netzwerkknoten (N1,N2,N3,N4,N5,N6)
- zwei Anschlüsse (11,12) des Submoduls (1),
wobei ein erster Halbleiterschalter (S1) der neun abschaltbaren Halbleiterschalter zwischen einem ersten Anschluss (11) der zwei Anschlüsse und einem ersten Netzwerkknoten (N1) der sechs Netzwerkknoten derart angeordnet ist, einen Strom vom ersten Netzwerkknoten (N1) zum ersten Anschluss (11) abschalten zu können,
wobei ein zweiter Halbleiterschalter (S2) der neun abschaltbaren Halbleiterschalter zwischen dem ersten Anschluss (11) und einem zweiten Netzwerkknoten (N2) der sechs Netzwerkknoten (N2) derart angeordnet ist, einen Strom vom zweiten Netzwerkknoten (N2) zum ersten Anschluss (11) abschalten zu können,
wobei ein dritter Halbleiterschalter (S3) der neun abschaltbaren Halbleiterschalter zwischen dem ersten Anschluss (11) und einem dritten Netzwerkknoten (N3) der sechs Netzwerkknoten derart angeordnet ist, einen Strom vom ersten Anschluss (11) zum dritten Netzwerkknoten (N3) abschalten zu können, wobei ein vierter Halbleiterschalter (S4) der neun abschaltbaren Halbleiterschalter zwischen dem ersten Netzwerkknoten (N1) und einem vierten Netzwerkknoten (N4) der sechs Netzwerkknoten derart angeordnet ist, einen Strom vom ersten Netzwerkknoten (N1) zum vierten Netzwerkknoten (N4) abschalten zu können,
wobei ein fünfter Halbleiterschalter (S5) der neun abschaltbaren Halbleiterschalter zwischen dem dritten Netzwerkknoten (N3) und einem sechsten Netzwerkknoten (N6) der sechs Netzwerkknoten derart angeordnet ist, einen Strom vom sechsten Netzwerkknoten (N6) zum dritten Netzwerkknoten (N3) abschalten zu können,
wobei ein sechster Halbleiterschalter (S6) der neun abschaltbaren Halbleiterschalter zwischen dem zweiten Netzwerkknoten (N2) und einem fünften Netzwerkknoten (N5) der sechs Netzwerkknoten derart angeordnet ist, einen Strom vom zweiten Netzwerkknoten (N2) zum fünften Netzwerkknoten (N5) abschalten zu können,
wobei ein siebter Halbleiterschalter (S7) der neun abschaltbaren Halbleiterschalter zwischen einem zweiten Anschluss (12) der zwei Anschlüsse und dem sechsten Netzwerkknoten (N6) derart angeordnet ist, einen Strom vom sechsten Netzwerkknoten (N6) zum zweiten Anschluss (12) abschalten zu können, wobei ein achter Halbleiterschalter (S8) der neun abschaltbaren Halbleiterschalter zwischen dem zweiten Anschluss (12) und dem vierten Netzwerkknoten (N4) derart angeordnet ist, einen Strom vom zweiten Anschluss (12) zum vierten Netzwercknoten (N4) abschalten zu können,
wobei ein neunter Halbleiterschalter (S9) der neun abschaltbaren Halbleiterschalter zwischen dem zweiten Anschluss (12) und dem fünften Netzwerkknoten (N5) derart angeordnet ist, einen Strom vom zweiten Anschluss (12) zum fünften Netzwercknoten (N5) abschalten zu können,
wobei ein erster Kondensator (C_{1,1}) der vier Kondensatoren zwischen dem ersten Netzwerkknoten (N1) und dem dritten Netzwerkknoten (N3) angeordnet ist,
wobei ein zweiter Kondensator (C_{1,2}) der vier Kondensatoren zwischen dem zweiten Netzwerkknoten (N2) und dem dritten Netzwerkknoten (N3) angeordnet ist,
wobei ein dritter Kondensator (C_{2,1}) der vier Kondensatoren zwischen dem vierten Netzwerkknoten (N4) und dem sechsten Netzwerkknoten (N6) angeordnet ist,
wobei ein vierter Kondensator (C_{2,2}) der vier Kondensatoren zwischen dem fünften Netzwerkknoten (N5) und dem sechsten Netzwerkknoten (N6) angeordnet ist.

2. Modularer Multilevel-Stromrichter (2) mit einer Vielzahl von Submodulen (1) nach Anspruch 1, wobei eine Serienschaltung von mindestens zwei Submodulen (1) einen Konverterarm (3) des Multilevel-Stromrichters (2) bildet, wobei eine Serienschaltung von zwei Konverterarmen (3) eine Konverterphase (4) bildet, wobei der Verbindungspunkt der zwei Konverterarme (3) einen Phasenanschluss (L1,L2,L3) des Multilevel-Stromrichters (2) bildet.

3. Modularer Multilevel-Stromrichter (2) nach Anspruch 2, wobei das dem Phasenanschluss (L1,L2,L3) abgewandte Ende des Konverterarms (3) einen Zwischenkreisanschluss (L+,L-) des Multilevel-Stromrichters (1) bildet.

4. Verfahren zum Betreiben eines Submoduls (1), wobei mittels von Schalthandlungen der abschaltbaren Halbleiterschalter (S1,...,S9) unterschiedliche Spannungen zwischen den Anschlüssen (11,12) des Submoduls (1) erzeugt werden.

5. Verfahren zur Herstellung eines Submoduls (1) nach Anspruch 1 aus zwei Teilmodulen (7), wobei ein Teilmodul (7) die Anschlüsse (11,12), den ersten, dritten, vierten, fünften, siebten und achten Halbleiterschalter (S1,S3,S4,S5,S7, S8), den ersten und den dritten Kondensator (C_{1,1},C_{2,1}) und den ersten, dritten, vierten und den sechsten Netzwerkknoten (N1, N3,N4,N6) umfasst, wobei das Submodul (1) dadurch gebildet wird, dass zwei baugleiche Teilmodule (7) jeweils an den Anschlüssen (11,12), den dritten Netzwerkknoten (N3) und den sechsten Netzwerkknoten (N6) miteinander verbunden werden.
